# FASCICULE DE BREVET EUROPEEN

(11) **EP 2 655 583 B1**
(45) Date de publication et mention de la délivrance du brevet: **11.03.2015**
(21) Numéro de dépôt: 11813879.1
(22) Date de dépôt: 22.12.2011
(51) Int. Cl.: C11B 9/02, B01D 11/04, C11B 1/10, A23L 1/221

(54) **PROCEDE POUR L'OBTENTION D'UN EXTRAIT ODORANT DE FLEURS ET/OU FEUILLES FRAICHES PAR DES SOLVANTS NATURELS**
VERFAHREN ZUR HERSTELLUNG EINES PARFÜMIERTEN EXTRAKTS AUS FRISCHEN BLUMEN UND/ODER BLÄTTERN UNTER VERWENDUNG NATÜRLICHER LÖSUNGSMITTEL
PROCESS FOR OBTAINING A SCENTED EXTRACT OF FRESH FLOWERS AND/OR LEAVES USING NATURAL SOLVENTS

(30) Priorité: 23.12.2010 FR 1005098
(43) Date de publication de la demande: 30.10.2013
(73) Titulaire: Charabot, 06131 Grasse (FR)
(72) Inventeur: LAVOINE-HANNEGUELLE, Sophie, F-06370 Mouans-Sartoux (FR)
(74) Mandataire: Dutto, Pierrick
(86) Numéro de dépôt international: PCT/FR2011/000674
(87) Numéro de publication internationale: WO 2012/085366

(56) Documents cités:
- WO-A1-2007/091901
- WO-A1-2008/153426
- US-A1- 2003 206 980

## Description

L'invention concerne un procédé pour l'obtention d'un extrait odorant à partir de fleurs, sommités fleuries et/ou feuilles fraiches par une combinaison de solvants naturels, les extraits ainsi obtenus et leurs utilisations.

Les extraits de fleurs et/ou feuilles fraiches sont notamment utilisés en parfumerie, cosmétique et arômes, et plus particulièrement ceux de fleurs ou feuilles odoriférantes telles que par exemple le jasmin, le mimosa, la rose, l'oranger amer, ou encore le basilic.

Il est connu que la culture et le traitement de plantes telle le jasmin sont délicats en raison de la fragilité de leurs fleurs, la cueillette nécessite une main-d'oeuvre abondante et précautionneuse, et l'obtention d'une concrète est très coûteuse dans la mesure où il faut un très grand nombre de fleurs ou de feuilles pour obtenir une petite quantité d'extrait utilisable en parfumerie. Par exemple, il ne faut pas moins de sept millions de fleurs de jasmin pour obtenir un kilogramme d'absolue.

Traditionnellement, on réalise principalement deux types de procédés d'obtention d'un extrait odorant.

D'une part, on réalise une extraction par des solvants volatils apolaires issus de la pétrochimie, comme l'hexane, le benzène ou l'éther de pétrole. L'eau des végétaux est alors décantée, et le solvant contenant le parfum est concentré sous vide pour livrer la concrète.

D'autre part, on réalise une extraction des substances odorantes d'une matière végétale par entraînement à la vapeur d'eau. Ce procédé ne convient toutefois pas pour certaines fleurs fragiles (jasmin, tubéreuse, mimosa), car il dénature certains des composants odorants, et les extraits obtenus ne sont pas exploitables en termes de qualité et/ou de rendement.

De même, l'extraction au CO₂ supercritique et l'appareillage industriel qu'il requiert est très complexe à mettre en oeuvre pour de telles fleurs fraiches, qui ne se conservent que très peu de temps après leur cueillette et se transportent difficilement. Les rendements susceptibles d'être obtenus par ce procédé sont également très faibles.

Ainsi, les produits floraux actuellement proposés sur le marché sont soit des huiles essentielles, soit des concrètes obtenues par des solvants apolaires pétroliers, soit plus communément des absolues issues du retraitement au CO₂ supercritique ou de lavages alcooliques de telles concrètes.

Toutefois, la composition des produits obtenus par de tels procédés est sensiblement différente de la matière première et leur odeur respective n'est pas comparable à celle de la fleur fraiche. Les solvants apolaires extraient notamment les matières grasses ce qui confère aux concrètes des notes grasses. Aussi, le fait d'avoir à requérir à un solvant pétrolier ne permet pas une adéquation à la charte Cosmebio.

On connaît également le document EP0309339 qui divulgue plus particulièrement un procédé de préparation d'une composition odorante de fleurs de jasmin obtenue par hydrolyse des composés isolés, et notamment des précurseurs, par extraction des fleurs par un solvant polaire aqueux ou hydro alcoolique.

Toutefois, de tels extraits révèlent la présence de linalol, géraniol, alcool benzylique, phényl-2-éthanol, méthyl-2-phénol, eugénol, isophytol, phytol et cis-jasmone en quantité non négligeable et dans des proportions variables et différentes de celles de l'absolue provenant des mêmes fleurs. Aussi, la note odorante de ces extraits est agréable mais plus piquante et plus épicée que celles des absolues correspondantes et l'odeur n'est pas comparable à celle de la fleur fraiche de jasmin.

D'une manière générale, il existe une réelle demande quant à obtenir un extrait odorant à partir de fleurs ou feuilles fraiches par des solvants naturels, qui présente un rendement au moins comparable à ceux pour l'obtention d'une huile essentielle ou d'une absolue de cette même fleur, l'extrait possédant un parfum sensiblement similaire à celui de la fleur naturelle et pouvant être utilisable en tant que tel en parfumerie.

Considérant ce qui précède, un problème que se propose de résoudre l'invention est de mettre en oeuvre un procédé pour l'obtention d'un extrait odorant à partir de fleurs et/ou feuilles fraiches par une combinaison de solvants naturels, non issus de la pétrochimie, et qui respecte la charte Cosmébio qui définit les principes fondamentaux de la cosmétique écologique et biologique suivant un cahier des charges certifié par Ecocert. Un tel procédé est facile à mettre en oeuvre, présente de bons rendements, et les extraits odorants ainsi obtenus possèdent une odeur sensiblement similaire à celle de la fleur fraiche, différent des standards de la parfumerie traditionnelle.

Le procédé selon l'invention offre notamment les avantages suivants par rapport à l'art antérieur :
- le procédé permet l'obtention d'un extrait odorant à partir de végétaux humides et fragiles telles que les fleurs fraiches, par exemple les fleurs fraiches de jasmin ;
- le procédé est simple à mettre en oeuvre, en particulier au niveau de l'extraction primaire qui peut ainsi se pratiquer avec du matériel rudimentaire sur site ;
- le procédé est économique en termes de dépenses énergétiques et financières, les temps d'extraction étant brefs ;
- le procédé permet la conservation des plantes fraiches sur plusieurs semaines, voire plusieurs mois, sous la forme d'un extrait primaire, ce qui permet leur transport sur de longues distances et d'étaler leur traitement dans le temps ;
- le procédé utilise des solvants naturels, non issus de la pétrochimie ;
- le procédé donne des rendements en termes de concentré au moins similaires et comparables à ceux obtenus selon les procédés traditionnels ;
- le procédé donne un extrait sensiblement déciré, stable, et
- les extraits odorants obtenus possèdent une odeur sensiblement similaire à celle de la plante fraiche, et sont utilisables en parfumerie.

L'invention a donc pour premier objet un procédé pour l'obtention d'un extrait odorant à partir de fleurs, sommités fleuries, et/ou feuilles fraiches d'un végétal humide comprenant les étapes suivantes selon lesquelles a) on cueille les fleurs, sommités fleuries, et/ou feuilles du végétal ; b) on infuse lesdites fleurs, sommités fleuries, et/ou feuilles fraichement cueillies, dans au moins un bain comprenant un solvant alcoolique, à une température inférieure à 50°C, de manière à obtenir un mélange alcoolique ; c) on filtre ledit mélange alcoolique de sorte à récupérer une infusion florale alcoolique ; et d) on réalise une extraction au CO₂ supercritique de l'infusion florale alcoolique pour obtenir ledit extrait odorant, cet extrait odorant étant titré à au moins 75% en alcool.

L'invention a également pour deuxième objet un extrait préparé par le procédé selon l'invention.

Enfin, l'invention a pour troisième objet, l'utilisation d'un extrait selon l'invention comme parfum, alcool parfumé de dilution, ingrédient de parfumerie, arôme alimentaire ou encore dans la composition d'un produit cosmétique.

L'invention et les avantages qui en découlent seront mieux compris à la lecture de la description et des modes de réalisation non limitatifs qui suivent, au regard des figures annexées dans lesquelles :
- la figure 1 représente un diagramme floral dans lequel on compare l'odeur d'un extrait hexanique de fleurs de jasmin avec celle d'un extrait obtenu selon le procédé selon l'invention ; et
- la figure 2 représente un diagramme floral dans lequel on compare l'odeur d'un extrait hexanique de fleurs de mimosa avec celle d'un extrait obtenu selon le procédé selon l'invention.

Le procédé selon l'invention est mis en oeuvre pour l'obtention d'un extrait odorant à partir de fleurs, sommités fleuries, et/ou feuilles fraiches, particulièrement fragiles, d'un végétal humide.

Un végétal humide ou frais est un organisme vivant faisant partie du règne végétal qui comprend au moins 70% d'eau en poids de son poids total, classiquement environ 85% d'eau, avant ou après perte à la dessication liée à la cueillette notamment.

A titre d'exemple non limitatif de fleurs fraiches, sommités fleuries et/ou feuilles, fragiles selon l'invention, on peut citer le jasmin et notamment parmi plus de 200 espèces, *Jasminum grandiflorum, Jasminum officinale, Jasminum odoratissimum, Jasminum sambac, Jasminum auriculatum, Jasminum flexile,* le mimosa, la rose, la tubéreuse, le genet, l'oranger amer, l'oeillet, la violette, la verveine, le tilleul, la camomille, la feuille de basilic, la feuille de coriandre, le frangipanier, le tiaré, le gardénia, la tagète, le souci, le narcisse, la jacinthe, la jonquille, le lys, le magnolia, le muguet, l'ylang-ylang, l'osmanthus, le lilas, le chèvrefeuille, ou encore le géranium.

Dans une première étape du procédé selon l'invention, on cueille les parties nobles du végétal à savoir les fleurs, sommités fleuries et/ou feuilles.

De telles fleurs, sommités fleuries et/ou feuilles fraichement cueillies sont très fragiles et ne peuvent être conservées en l'état que peu de temps, au maximum quelques heures, par exemple 12 heures, et seront préférentiellement utilisées dans un délai de 3 heures après leur cueillette sous peine de se dégrader et de perdre une grande partie et parfois l'ensemble de leurs qualités odorantes, et principalement odoriférantes.

Par exemple, les fleurs de jasmin se dégradent 3 heures après leur cueillette, et les fleurs de mimosa ou de tubéreuse peuvent être conservées en l'état jusqu'à 12 heures.

Ensuite, selon le procédé selon l'invention, on infuse lesdites fleurs, sommités fleuries, et/ou feuilles fraichement cueillies dans au moins un bain comprenant un solvant alcoolique, à une température inférieure à 50°C, de manière à obtenir un mélange alcoolique.

A titre d'exemple de solvant alcoolique selon l'invention, on utilise un alcool naturel choisi parmi le méthanol, l'éthanol, propanol 1, 2-propanol, butanol, isobutanol, pentanol, alcool isoamylique, et préférentiellement l'éthanol qui possède un point d'ébullition plus bas (sauf pour le méthanol) et qui est beaucoup moins toxique que le méthanol notamment.

Selon l'invention, les fleurs, sommités fleuries et/ou feuilles sont préférentiellement infusées dans le solvant alcoolique à température ambiante, c'est-à-dire à une température comprise entre 15 et 35°C.

La durée de l'étape d'infusion selon l'invention peut aller jusqu'à plusieurs heures, par exemple 12 heures et aura une influence sur le profil olfactif de l'extrait.

Avantageusement, la durée de l'infusion selon l'invention a été optimisée et est comprise entre une dizaine de minutes à environ deux heures, temps nécessaire et suffisant pour extraire les molécules odorantes recueillies dans l'extrait alcoolique primaire odorant selon l'invention.

Lors de l'infusion, les fleurs, sommités fleuries et/ou feuilles baignent dans le solvant alcoolique et peuvent être délicatement brassées.

Avantageusement, l'infusion est réalisée en circulation de solvant en circuit fermé, c'est-à-dire que l'on fait circuler le solvant sur les fleurs, sommités fleuries et/ou feuilles de manière à créer un mouvement dans l'extracteur, sans briser notamment les pétales, et éviter les zones de saturation du solvant en périphérie des pétales. Le brassage apporte ainsi du solvant moins saturé qui va extraire à son tour.

De façon alternative, on peut réaliser des infusions dans plusieurs bains concomitants ou successifs, suivant la quantité de fleurs et/ou feuilles à traiter.

On peut faire par exemple un seul bain puis un rinçage au solvant d'extraction neuf, plusieurs bains avec les mêmes fleurs et/ou feuilles, voire plusieurs passées de fleurs et/ou feuilles sur un même bain du fait de la faible saturation de l'éthanol, pour un ratio final en poids/poids fleurs-feuilles / solvant alcoolique de 1:1 à 1:10, préférentiellement de 1:1 à 1:3.

Par exemple, on réalise avantageusement plusieurs repasses de fleurs et/ou feuilles dans un même bain d'alcool pour saturer celui-ci, par exemple jusqu'à 5 repasses, ce qui permet de concentrer l'extrait primaire alcoolique. Ceci s'avère plus économique en termes de volumes à transporter et à traiter par la suite au CO₂ supercritique.

Ensuite, selon le procédé selon l'invention, les fleurs, sommités fleuries et/ou feuilles sont égouttées, sans être trop écrasées, et on filtre le mélange alcoolique ainsi obtenu de sorte à récupérer une infusion florale alcoolique apte à être conservée au frais à une température d'environ 4 à 10°C pendant un jour à plusieurs mois.

Une telle infusion florale alcoolique selon l'invention est un produit éventuellement coloré, particulièrement riche en eau et en sucres, titré à au moins 45% en alcool.

Cette étape d'infusion selon l'invention est essentielle car elle permet de pouvoir conserver pendant plusieurs semaines entre 4 et 10°C sous forme d'infusion florale alcoolique, un extrait de fleurs et/ou feuilles fraiches fragiles qui ne se conservent pas, et ceci sans altérer ces qualités odorantes. En effet, de telles fleurs et/ou feuilles fraiches doivent être utilisées rapidement après leur cueillette sous peine de sécher et de perdre toutes leurs qualités odorantes, principalement odoriférantes.

A cet effet, avantageusement, le procédé selon l'invention comprend en outre une étape selon laquelle on conserve l'infusion florale alcoolique au frais à une température d'environ 4 à 10°C pendant une durée comprise entre 1 jour et plusieurs mois, par exemple 12 voire 24 mois.

Ainsi, le procédé selon l'invention est facile à mettre en oeuvre et limite les contraintes de temps. De plus, le procédé selon l'invention permet de se prémunir contre la logistique complexe liée à l'encombrement des appareillages d'extraction et au fait que les usines les abritant ne sont souvent pas situées à proximité des lieux de récolte. Au contraire, l'infusion florale alcoolique obtenue selon l'invention peut être facilement acheminée sur les lieux où elle va subir le raffinage nécessaire à l'obtention d'un extrait odorant à odeur de fleurs et/ou feuilles fraiches selon l'invention.

A cet effet, selon le procédé selon l'invention, on réalise une extraction au CO₂ supercritique de l'infusion florale alcoolique pour obtenir ledit extrait odorant.

Avantageusement, cet extrait odorant obtenu selon l'invention est titré à au moins 75% en alcool.

Le procédé d'extraction par CO₂ supercritique est connu. A l'état supercritique, à savoir plus de 74 bars et de 31°C, le CO₂ possède des propriétés très particulières et peut être utilisé comme solvant d'extraction naturel. Le fluide obtenu est caractérisé par une grande diffusivité (de l'ordre de celle des gaz), ce qui lui confère une bonne aptitude à la diffusion, et une densité élevée qui le dote d'une capacité de transport et d'extraction importante.

L'étape d'extraction au CO₂ supercritique selon l'invention peut être réalisée en mode statique ou en mode dynamique.

Selon l'invention, le CO₂ est préférentiellement utilisé à une pression comprise entre 130 et 200 bars et à une température comprise entre 35 et 55°C, encore plus préférentiellement à 150 bars et 45°C, à contre courant et convient particulièrement bien pour l'obtention d'un extrait odorant de fleurs et/ou feuilles fraiches, clair, limpide et stable, débarrassé en grande partie des sucres, des matières colorantes, de l'eau et titré à au moins 75% en alcool.

Avantageusement, le procédé selon l'invention comprend en outre une étape suivant laquelle l'extrait odorant obtenu après extraction au CO₂ supercritique est concentré en l'état, sous vide par chauffage doux inférieur à 60°C, ou sur un support comme une huile naturelle, du beurre de karité, de la glycérine naturelle, ou une molécule parfumante naturelle telle que l'acétate de benzyle naturel.

Aussi, le procédé selon l'invention donne des rendements au moins similaires à ceux obtenus avec les procédés traditionnels pour l'obtention d'une huile essentielle ou d'une absolue à partir de ces mêmes fleurs, et supérieurs à ceux obtenus par une extraction directement sur les fleurs au CO₂ supercritique.

A titre d'exemple, selon le procédé selon l'invention, on obtient des rendements massiques équivalents à 2kg de fleurs par kg d'extrait.

De plus, quand on concentre un tel extrait obtenu selon le procédé selon l'invention, on obtient des rendements ramené à la fleur de l'ordre de 0,1% à 0,2% soit 0,5 à 1 tonne de fleurs par kg d'extrait, équivalent à ceux obtenus pour l'absolue.

A titre d'exemple, le tableau ci-dessous met en évidence, par des mesures réalisées en chromatographie en phase gazeuse par la Demanderesse, la composition d'un extrait obtenu selon le procédé selon l'invention à partir de 750kg de fleurs *Jasminum grandiflorum* cueillies dans les Alpes Maritimes, d'aout à octobre 2010. 2 heures après leur récolte, ces fleurs ont été infusées, délicatement brassées, dans de l'éthanol naturel à 25°C pendant 20 minutes, le ratio fleur/éthanol étant de 1:1 en poids. Ensuite, les fleurs ont été égouttées, sans être trop écrasées et rincées. L'infusion florale alcoolique a ensuite été filtrée et conditionnée de 2 à 3 mois en attente d'extraction au CO₂ supercritique. Enfin, une extraction au CO₂ supercritique de l'infusion florale alcoolique obtenue a été réalisée à 45°C et 150 bars pendant 20 minutes. L'extrait odorant ainsi obtenu selon l'invention a ensuite été concentré partiellement sous vide à basse température (35°C). A cet effet, on compare dans le tableau ci-dessous la composition de l'extrait odorant selon l'invention ainsi obtenu avec celle d'une absolue traditionnelle obtenue par extraction à l'hexane issue de la même récolte de fleurs et diluée à 10% dans l'alcool.

| Molécules identifées | Absolue hexanique de Jasmin | Concentré d'un Extrait de Jasmin obtenu selon l'invention |
|---|---|---|
| cis-3-hexenol | 0,06 | - |
| trans-2-hexenol | 0,05 | - |
| diethyl oxalate | - | 0,16 |
| phenylacetaldehyde | - | 0,25 |
| Alcool Benzylique | 1,8 | 3,17 |
| benzoate methyle | 0,25 | - |
| Maltol | 0,22 | 1,19 |
| p-Crésol + linalol | 3,16 | 4,45 |
| alcool phenylethyl | 0,21 | - |
| Acétate Benzyle | 11,48 | 11,12 |
| benzoate ethyle | - | 0,11 |
| salicylate de methyle | 0,05 | - |
| α terpineol | 0,07 | - |
| acide benzoique | 0,39 | 0,37 |
| acetate phenylethyl | 0,06 | - |
| geraniol | 0,07 | - |
| Indole | 0,38 | - |
| Anthranilate Méthyle | - | 0,17 |
| Eugénol | 2,12 | 0,51 |
| vanilline + cis jasmone | 1,95 | 2,16 |
| isoeugenol + geranyl acetone | 0,13 | 0,15 |
| Jasmin lactone | 0,85 | 0,23 |
| alcane c15 | 0,17 | - |
| c,t α Farnésène | 0,08 | - |
| t,t α Farnésène | 1,87 | 2,53 |
| benzoate c-3-hexenyle + lactone δ | 1,23 | 1,97 |
| Acétylanthranilate méthyle | 0,57 | 0,48 |
| methoxy-6-eugenol | 0,14 | 0,2 |
| t Jasmonate méthyle | 0,69 | 0,47 |
| c Jasmonate méthyle | 0,22 | 0,75 |
| aldehyde coniferyle | 0,16 | - |
| alcool coniferyle | - | 0,43 |
| Benzoate benzyle | 10,12 | 9,35 |
| Triméthylpentadécanone-2 | 1,82 | 1,6 |
| salicylate benzyle | 0,62 | 0,32 |
| palmitate methyle | 0,87 | 0,9 |
| Isophytol | 9,81 | 10,8 |
| palmitate ethyle + acide C16 | 0,87 | 0,42 |
| Géranyllinalol | 3,71 | 5,63 |
| linolenate methyle | 1,95 | 1,8 |
| Phytol | 13,58 | 15,31 |
| linolenate ethyle + acetate isophytyle | 2, 02 | 0,58 |
| Acétate phytyle | 4,68 | 3,59 |
| alcane c23 | 0,27 | - |
| linolenate phenylethyl | 0,72 | - |
| squalene | 1,82 | 1,52 |
| epoxydihydrosqualene | 3,41 | - |

Ce tableau met en évidence, à partir des résultats obtenus, des différences de composition entre un extrait de fleurs de jasmin obtenu selon le procédé selon l'invention et une absolue hexanique de ces mêmes fleurs.

Plus particulièrement, l'extrait de fleurs de jasmin obtenu selon le procédé selon l'invention comprend notamment, en quantité significative, plus de jasmonate de méthyle et de maltol que l'absolue hexanique, et comprend du phénylacétaldéhyde alors que l'absolue hexanique n'en comprend pas.

Aussi, l'extrait de fleurs de jasmin obtenu selon le procédé selon l'invention comprend, en quantité significative, moins d'eugénol que l'absolue hexanique, et ne comprend pas de géraniol ni d'indole sur cette production.

De plus, si l'on compare avec les composés identifiés dans l'extrait divulgué dans le document EP0309339, l'extrait obtenu selon le procédé selon l'invention ne comprend par exemple pas de géraniol ou encore de phényl-2-éthanol.

Ainsi, de telles différences de composition entre les extraits se caractérisent par des odeurs sensiblement différentes.

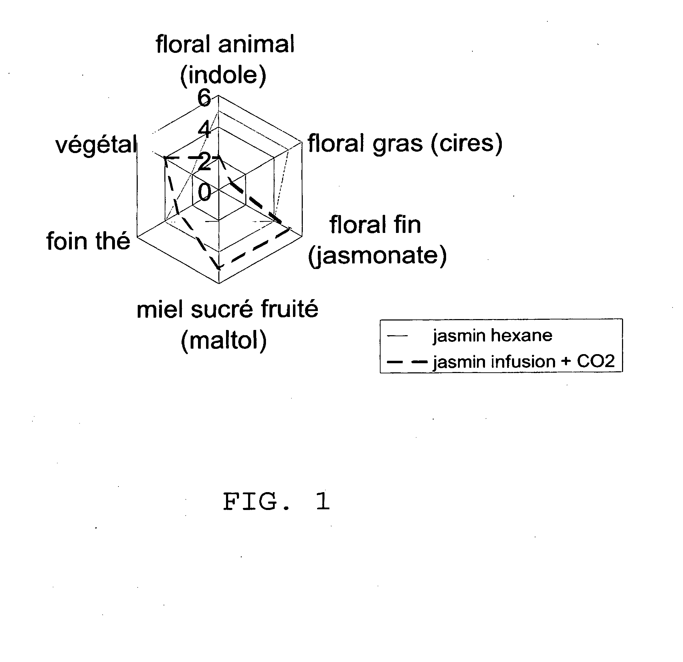

En effet, tel qu'illustré par la figure 1, la Demanderesse a réalisé un test d'odeur auprès de 8 professionnels afin de comparer les odeurs des 2 extraits de fleurs de jasmin mentionnés dans le tableau ci-dessus.

Ce diagramme floral met en évidence, à partir des résultats obtenus, des différences d'odeur entre les 2 extraits caractérisées par les différences de composition mentionnées dans le tableau ci-dessus.

L'extrait obtenu selon le procédé selon l'invention offre des senteurs florales fines dues en particulier aux jasmonates ainsi qu'une senteur miel sucrée fruitée due en particulier au maltol. Aussi, on observe des notes très végétale, de foin thé, caractéristiques de l'odeur de terroir, des buissons et fleurs de jasmin avec l'extrait obtenu selon le procédé selon l'invention ce qui n'est pas le cas avec l'extrait hexanique. En revanche, l'absence d'indole et de cires dans cet extrait selon l'invention permet de limiter la puissante odeur florale animale et grasse caractéristiques de ces composés que l'on retrouve uniquement dans l'extrait hexanique.

A titre d'exemple, l'extrait obtenu selon le procédé selon l'invention à partir de fleurs de jasmin se présente sous forme d'un liquide mobile limpide, de couleur jaune très pale à jaune, transparent et offre une odeur native des fleurs fraiches. Après concentration, on obtient un concentré qui se présente sous forme d'une pâte ou d'un liquide brun-vert très puissant à note jasminée, végétale, fruitée, miellée.

De même, le tableau ci-dessous met en évidence, par des mesures réalisées en chromatographie en phase gazeuse par la Demanderesse, la composition d'un extrait obtenu selon le procédé selon l'invention à partir de 2kg de rameaux fleuris de mimosa cueillis dans le massif du Tanneron en mars 2010. 4 heures après leur récolte, ces rameaux fleuris de mimosa ont été infusés, dans 6kg d'éthanol naturel en circulation à 25°C pendant 2 heures, le ratio rameaux fleuris de mimosa/éthanol étant de 1:3 en poids. L'infusion florale alcoolique a ensuite été filtrée et conditionnée en attente d'extraction au CO₂ supercritique pendant 3 semaines. Enfin, une extraction au CO₂ supercritique de l'infusion florale alcoolique obtenue a été réalisée à 45°C et 150 bars pendant 20 minutes. L'extrait odorant ainsi obtenu selon l'invention a ensuite été concentré sous vide, glacé et filtré, pour un rendement en concentré soluble ramené à la fleur de 0,40% sur cet essai. A cet effet, on compare dans le tableau ci-dessous la composition de l'extrait odorant selon l'invention ainsi obtenu avec celle d'une absolue traditionnelle obtenue par extraction à l'hexane issue de la même récolte de rameaux fleuris de mimosa et diluée à 10% dans l'alcool.

| Molécules identifiées analyse GC / apolaire | Indice de Kovats | Absolue hexanique de rameaux de Mimosa | Concentré d'un Extrait de Rameaux de Mimosa obtenu selon l'invention |
|---|---|---|---|
| taux volatils^{a} / lourds^{b} | | 0,12 | 0,68 |
| cis-3-hexenol | 839 | 0,03 | - |
| diethyloxalate | 940 | - | 0,08 |
| benzyl alcool | 1010 | 0,09 | 0,29 |
| heptanoate ethyle | 1080 | 0,05 | nd |
| phenylethyl alcool | 1096 | 0,17 | 0,1 |
| 2,3-dihydro-3,5-dihydroxy-6-methylpyran-4-one [28564-83-2] | 1115 | - | 0,06 |
| benzoate ethyle | 1146 | 0,04 | nd |
| benzoic acid | 1152 | 0,04 | 0,47 |
| octanoic acid | 1170 | - | 0,18 |
| 5-Hydroxymethyl furfural | 1176 | - | 0,09 |
| 2,3-dihydrobenzofuran | 1194 | - | 0,16 |
| anisaldehyde | 1224 | 0,02 | 0,09 |
| anisic alcool | 1267 | 0,03 | 0,13 |
| methyl anisate | 1327 | 0,03 | 0,08 |
| DEA ald C9 | 1371 | 0,04 | 0,05 |
| Ethyl anisate | 1424 | 0,07 | - |
| alcane C15 | 1500 | 0,05 | 0,28 |
| alcene C16 | 1585 | 0,03 | 0,17 |
| alcane C16 | 1600 | - | 0,14 |
| heptadecadiène | | 0,04 | 0,63 |
| heptadec-8-ene | 1684 | 2,05 | 12,6 |
| alcane C17 | 1700 | 0,38 | 2,2 |
| benzoate benzyle | 1726 | 0,04 | 0,04 |
| alcane C18 | 1800 | 0,07 | 0,24 |
| 6,10,14 trimethylpentadecan-2-one | 1830 | 0,08 | 0,23 |
| alcene C19 | 1894 | 0,05 | 0,11 |
| heptadecenal | - | - | 0,2 |
| alcane C19 | 1900 | 1,79 | 6,91 |
| heptadecanal | 1897 | - | 0,41 |
| palmitate ethyle | 1976 | 0,96 | 0,96 |
| alcane C20 | 2000 | 0,72 | 0,16 |
| alpha-kaurene | 2006 | - | 0,09 |
| alcane C21 | 2100 | 0,51 | 1,82 |
| linolenate ethyle | 2153 | 0,72 | 0,35 |
| alcane C23 | 2300 | 0,24 | 2,83 |
| alcane C24 | 2400 | - | 0,21 |
| alcane C25 | 2500 | 0,02 | 0,69 |
| Lupenone | | 52,08 | 29,35 |
| Lupeol | | 7,03 | 3,95 |

| | | | |
|---|---|---|---|
| a = composés volatils dont l'indice de kovats est inferieur à 2500 b = composés de fonds à partir de l'indice de kovats égal à 2500 | | | |

Ce tableau met en évidence, à partir des résultats obtenus, une variation notable de l'équilibre chimique entre les composés les plus volatiles (les plus odorants) et les composés les plus lourds au profit de l'extrait de rameaux fleuris de mimosa (0,68) obtenu selon le procédé selon l'invention par rapport à l'extrait classique (hexane puis éthanol) (0,12). On observe ainsi des différences de composition entre cet extrait obtenu selon le procédé selon l'invention et l'absolue, et notamment l'extrait de rameaux fleuris de mimosa obtenu selon le procédé selon l'invention comprend, en quantité significative, plus de heptadec-8-ène que l'absolue hexanique, et comprend deux fois moins de lupenone et lupeol sur cette production.

Ainsi, de telles différences de composition entre les extraits se caractérisent par des odeurs sensiblement différentes.

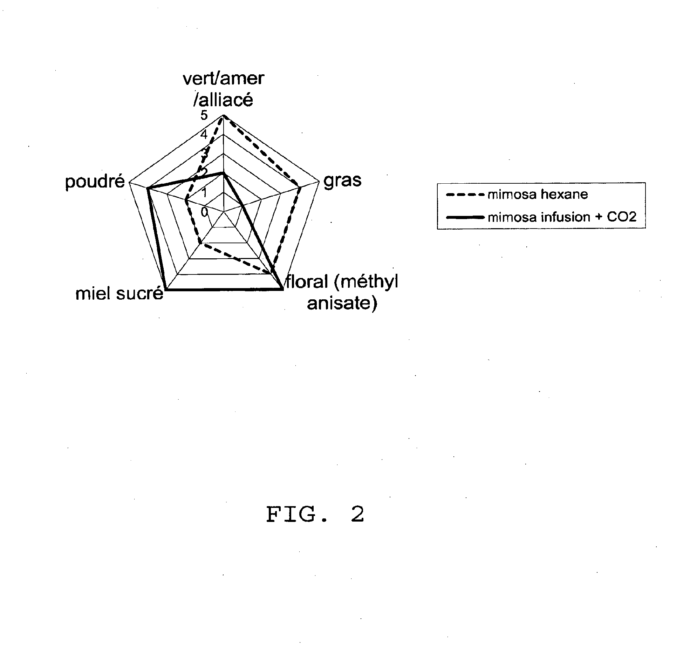

En effet, tel qu'illustré par la figure 2, la Demanderesse a réalisé un test d'odeur auprès de 8 professionnels afin de comparer les odeurs des 2 extraits de rameaux fleuris de mimosa mentionnés dans le tableau ci-dessus.

Ce diagramme floral met en évidence, à partir des résultats obtenus, des différences d'odeur entre les 2 extraits caractérisées par les différences de composition mentionnées dans le tableau ci-dessus.

L'extrait obtenu selon le procédé selon l'invention offre des senteurs florales fines caractéristiques du méthyl anisate, très végétale, poudrée et fidèle à l'odeur du mimosa. Au contraire, l'absolue hexanique donne une puissante note verte, florale grasse (cis-3-hexenol), puissante en tête et présentant une note de fond plus faible et moins persistante.

A titre d'exemple, l'extrait obtenu selon le procédé selon l'invention à partir de rameaux fleuris de mimosa se présente sous forme d'un liquide mobile alcoolique titrant plus de 85% en poids d'éthanol, jaune transparent et offre une odeur très légère, douce miellée, caractéristique des fleurs de mimosa fraîches. Après concentration, on obtient avantageusement un concentré qui peut être glacé et filtré, et devient alors pâteux, plus foncé, vert olive, son odeur s'intensifiant en notes florales, miellées, végétales.

Le procédé selon l'invention permet ainsi l'obtention d'un extrait odorant de fleurs et/ou feuilles fraîches par des solvants naturels, non issus de la pétrochimie, et qui respecte la charte Cosmebio qui définit les principes fondamentaux de la cosmétique écologique et biologique suivant un cahier des charges certifié par Ecocert. Le procédé selon l'invention permet l'obtention d'extraits odorants fidèles à l'odeur des fleurs fraiches naturelles, et qui sont différents des standards de la parfumerie traditionnelle.

Aussi, selon un autre aspect, l'invention concerne un extrait préparé par le procédé selon l'invention.

De tels extraits sont très difficilement caractérisables en tant que tels car ils varient, pour une même espèce, suivant différents facteurs tels que les fleurs utilisées, le lieu de récolte, ou encore l'année de récolte.

Selon un troisième aspect de l'invention, les extraits ainsi obtenus selon le procédé selon l'invention sont utilisables en l'état comme parfum, ou alcool parfumé de dilution ou encore ingrédient de parfumerie. De tels extraits peuvent remplacer avantageusement l'alcool neutre de dilution d'une eau de toilette ou d'un parfum. Ils peuvent également être utilisés sous forme concentrée.

En effet, l'extrait obtenu après extraction au CO₂ supercritique est un alcool naturel délicatement parfumé par la matière végétale comme la fleur de jasmin, liquide limpide qui peut être utilisé en l'état. L'extrait n'a subi aucune dénaturation par chauffage, et l'odeur est très fidèle à celle de la plante. De plus, l'extrait selon l'invention est stable au stockage tandis que l'absolue, par exemple l'absolue de jasmin, dépose des cires dans le temps (sédiments), ce qui influe sur l'aspect voire sur l'odeur.

L'extrait selon l'invention peut également être utilisé comme arôme alimentaire ou encore dans la composition d'un produit cosmétique.

A titre d'exemple de composition cosmétique, on peut citer des compositions destinées à une application topique notamment sur la peau tel qu'un gel, une crème, un lait, une lotion, une huile, un shampoing, un savon.

Bien entendu, l'invention ne se limite pas aux modes de réalisation et aux exemples présentés ci-dessus et l'homme du métier, grâce à des opérations de routine, pourra être amené à réaliser d'autres modes de réalisation non décrits explicitement, qui entrent dans le cadre large de l'invention.

## Revendications

1. Procédé pour l'obtention d'un extrait odorant à partir de fleurs, sommités fleuries et/ou feuilles fraiches d'un végétal humide comprenant les étapes suivantes selon lesquelles :
a) on cueille les fleurs, sommités fleuries et/ou feuilles du végétal ;
b) on infuse lesdites fleurs, sommités fleuries et/ou feuilles fraichement cueillies dans au moins un bain comprenant un solvant alcoolique, à une température inférieure à 50°C, de manière à obtenir un mélange alcoolique ;
c) on filtre ledit mélange alcoolique de sorte à récupérer une infusion florale alcoolique ; et
d) on réalise une extraction au CO₂ supercritique de l'infusion florale alcoolique pour obtenir ledit extrait odorant, cet extrait odorant étant titré à au moins 75% en alcool.

2. Procédé selon la revendication 1, dans lequel lesdites fleurs, sommités fleuries et/ou feuilles sont choisies parmi le jasmin, et notamment parmi plus de 200 espèces, *Jasminum grandiflorum, Jasminum officinale, Jasminum odoratissimum, Jasminum sambac, Jasminum auriculatum, Jasminum flexile,* le mimosa, la rose, la tubéreuse, le genet, l'oranger amer, l'oeillet, la violette, la verveine, le tilleul, la camomille, la feuille de basilic, la feuille de coriandre, le frangipanier, le tiaré, le gardénia, la tagète, le souci, le narcisse, la jacinthe, la jonquille, le lys, le magnolia, le muguet, l'ylang-ylang, l'osmanthus, le lilas, le chèvrefeuille, ou encore le géranium.

3. Procédé selon l'une des revendications 1 ou 2, dans lequel les fleurs, sommités fleuries et/ou feuilles sont infusées dans un délai de 3 heures après la cueillette.

4. Procédé selon l'une des revendications 1, 2 ou 3, dans lequel le solvant alcoolique est un solvant alcoolique naturel choisi parmi le méthanol, éthanol, propanol 1, 2-propanol, butanol, isobutanol, pentanol, alcool isoamylique.

5. Procédé selon l'une des revendications précédentes, dans lequel l'infusion est réalisée en circulation de solvant, avec ajout de fleurs, sommités fleuries et/ou feuilles fraichement cueillies en une ou plusieurs fois pour un ratio final en poids/poids fleurs, sommités fleuries et/ou feuilles / solvant alcoolique de 1:1 à 1:10.

6. Procédé selon la revendication 5, dans lequel le ratio final fleurs, sommités fleuries et/ou feuilles / solvant alcoolique est de l'ordre de 1:1 à 1:3.

7. Procédé selon l'une des revendications précédentes, dans lequel on infuse lesdites fleurs et/ou sommités fleuries à une température comprise entre 15 et 35°C pendant une dizaine de minutes à environ deux heures.

8. Procédé selon l'une des revendications précédentes, comprenant en outre une étape selon laquelle on conserve l'infusion florale alcoolique au frais à une température d'environ 4 à 10°C pendant une durée comprise entre 1 jour et plusieurs mois.

9. Procédé selon l'une des revendications précédentes, dans lequel l'extraction au CO₂ supercritique est réalisée à une pression comprise entre 130 et 200 bars et à une température comprise entre 35 et 55°C.

10. Procédé selon l'une des revendications précédentes, comprenant en outre une étape selon laquelle l'extrait odorant est concentré en l'état, sous vide par chauffage à une température inférieure à 60°C, ou sur une huile naturelle, du beurre de karité, de la glycérine naturelle, l'acétate de benzyle naturel.

11. Procédé selon l'une des revendications précédentes, dans lequel l'extrait odorant et/ou l'extrait odorant concentré présentent une odeur sensiblement similaire à l'odeur des fleurs, sommités fleuries et/ou feuilles cueillies.

12. Extrait préparé selon l'une des revendications précédentes.

13. Utilisation d'un extrait selon la revendication 12 pour la préparation d'un parfum, d'un alcool parfumé de dilution, comme ingrédient de parfumerie, comme arôme alimentaire ou encore dans la composition d'un produit cosmétique.

## Patentansprüche

1. Verfahren zum Erhalten eines Duftextrakts aus Blüten, Blütenspitzen und/oder frischen Blättern einer Feuchtpflanze, wobei das Verfahren die folgenden Schritte umfasst, gemäß denen:
a) die Blüten, Blütenspitzen und/oder Blätter der Pflanze gepflückt werden;
b) die besagten frisch gepflückten Blüten, Blütenspitzen und/oder Blätter in mindestens einem Bad, das ein alkoholisches Lösungsmittel umfasst, bei einer Temperatur von weniger als 50 °C derart ziehengelassen werden, dass eine alkoholische Mischung erhalten wird;
c) die besagte alkoholische Mischung derart filtriert wird, dass ein alkoholischer Blumenaufguss gewonnen wird; und
d) eine Extraktion des alkoholischen Blumenaufguss in überkritischem CO₂ durchgeführt wird, um den besagten Duftextrakt zu erhalten, wobei dieser Duftextrakt auf mindestens 75 % Alkohol titriert wird.

2. Verfahren nach Anspruch 1, wobei die besagten Blüten, Blütenspitzen und/oder Blätter aus dem Jasmin und insbesondere aus mehr als 200 Spezies, *Jasminum grandiflorum, Jasminum officinale, Jasminum odoratissimum, Jasminum sambac, Jasminum auriculatum, Jasminum flexile,* der Mimose, der Rose, der Tuberose, dem Ginster, der Bitterorange, der Nelke, dem Veilchen, dem Eisenkraut, der Linde, der Kamille, dem Basilikumblatt, dem Korianderblatt, der Frangipani, der Tiare, der Gardenie, der Tagetes, der Ringelblume, der Narzisse, der Hyazinthe, der Osterglocke, der Lilie, der Magnolie, dem Maiglöckchen, dem Ylang-Ylang-Baum, der Osmanthus, dem Flieder, dem Geißblatt oder auch der Geranie ausgewählt sind.

3. Verfahren nach einem der Ansprüche 1 oder 2, wobei die Blüten, Blütenspitzen und/oder Blätter innerhalb einer Zeitspanne von 3 Stunden nach dem Pflücken ziehengelassen werden.

4. Verfahren nach einem der Ansprüche 1, 2 oder 3, wobei das alkoholische Lösungsmittel ein natürliches alkoholisches Lösungsmittel ist, das aus Methanol, Ethanol, 1-Propanol, 2-Propanol, Butanol, Isobutanol, Pentanol, Isoamylalkohol ausgewählt ist.

5. Verfahren nach einem der vorhergehenden Ansprüche, wobei das Ziehenlassen unter Lösungsmittelzirkulation mit einer Zugabe von frisch gepflückten Blüten, Blütenspitzen und/oder Blättern ein oder mehrere Male zu einem Endgewichtsverhältnis von Blüten, Blütenspitzen und/oder Blättern zu alkoholischem Lösungsmittel von 1:1 bis 1:10 durchgeführt wird.

6. Verfahren nach Anspruch 5, wobei das Endgewichtsverhältnis von Blüten, Blütenspitzen und/oder Blättern zu alkoholischem Lösungsmittel in der Größenordnung von 1:1 bis 1:3 liegt.

7. Verfahren nach einem der vorhergehenden Ansprüche, wobei die besagten Blüten und/oder Blütenspitzen bei einer Temperatur zwischen 15 und 35 °C während etwa zehn Minuten bis ungefähr zwei Stunden ziehengelassen werden.

8. Verfahren nach einem der vorhergehenden Ansprüche, das außerdem einen Schritt umfasst, gemäß dem der alkoholische Blumenaufguss bei einer Temperatur von ungefähr 4 bis 10 °C während eines Zeitraums zwischen 1 Tag und mehreren Monaten frisch gehalten wird.

9. Verfahren nach einem der vorhergehenden Ansprüche, wobei die Extraktion in überkritischem CO₂ bei einem Druck zwischen 130 und 200 bar und bei einer Temperatur zwischen 35 und 55 °C durchgeführt wird.

10. Verfahren nach einem der vorhergehenden Ansprüche, das außerdem einen Schritt umfasst, gemäß dem der Duftextrakt in der gegenwärtigen Form unter Vakuum durch Erhitzung auf eine Temperatur von weniger als 60 °C oder in einem natürlichen Öl, Sheabutter, natürlichem Glycerin, natürlichem Benzylacetat konzentriert wird.

11. Verfahren nach einem der vorhergehenden Ansprüche, wobei der Duftextrakt und/oder der konzentrierte Duftextrakt einen Duft aufweist, der im Wesentlichen dem Geruch von gepflückten Blüten, Blütenspitzen und/oder Blättern ähnlich ist.

12. Extrakt, der nach einem der vorhergehenden Ansprüche hergestellt wurde.

13. Verwendung eines Extrakts nach Anspruch 12 zur Herstellung eines Parfüms, eines parfümierten Alkohols zur Verdünnung, als Inhaltsstoff in der Parfümerie, als Lebensmittelaroma oder auch in der Zusammensetzung eines Kosmetikprodukts.

## Claims

1. Process for obtaining a scented extract from fresh flowers, flowering tops, and/or leaves of a moist plant including the following steps, wherein:
a) the flowers, flowering tops and/or leaves of the plant are picked;
b) said flowers, flowering tops, and/or freshly cut leaves are infused in at least one bath including an alcoholic solvent, at a temperature below 50°C, so as to obtain an alcoholic mixture;
c) said alcoholic mixture is filtered so that an alcoholic floral infusion is recovered; and
d) a supercritical CO₂ extraction of the alcoholic floral infusion is performed to obtain said scented extract, this scented extract being titrated with at least 75% alcohol.

2. Process according to claim 1, wherein said flowers, flowering tops and/or leaves are chosen from jasmine, and in particular from among more than 200 species, *Jasminum grandiflorum, Jasminum officinale, Jasminum odoratissimum, Jasminum sambac, Jasminum auriculatum, Jasminum flexile,* mimosa, rose, tuberose, genet, bitter orange, carnation, violet, verbena, linden, chamomile, basil leaf, coriander leaf, frangipani, tiaré, gardenia, marigold, French marigold, narcissus, hyacinth, daffodil, lily, magnolia, lily of the valley, ylang-ylang, osmanthus, lilac, honeysuckle or geranium.

3. Process according to any of claims 1 or 2, wherein the flowers, flowering tops and/or leaves are infused within a period of 3 hours after picking.

4. Process according to any of claims 1, 2 or 3, wherein the alcoholic solvent is a natural alcoholic solvent chosen from methanol, ethanol, propanol 1, 2-propanol, butanol, isobutanol, pentanol, and isoamylic alcohol.

5. Process according to any of the above claims wherein the infusion is performed by circulating solvent, adding freshly picked flowers, flowering tops and/or leaves one or more times for a final weight/weight ratio of flowers, flowering tops and/or leaves to alcoholic solvent of 1:1 to 1:10.

6. Process according to claim 5, wherein the final ratio of flowers, flowering tops and/or leaves to alcoholic solvent is in the order of 1:1 to 1:3.

7. Process according to any of the above claims, wherein said flowers and/or flowering tops are infused at a temperature of between 15 and 35°C for a period of around ten minutes to around two hours.

8. Process according to any of the above claims, further including a step wherein the alcoholic floral infusion is kept cool at a temperature of around 4 to 10°C for a period of between 1 day and a number of months.

9. Process according to any of the above claims, wherein the supercritical CO₂ extraction is performed at a pressure of between 130 and 200 bars and at a temperature of between 35 and 55°C.

10. Process according to any of the above claims, further including a step wherein the scented extract is concentrated as is, under vacuum by heating at a temperature below 60°C, or on a natural oil, shea butter, natural glycerin or natural benzyl acetate.

11. Process according to any of the above claims, wherein the scented extract and/or the concentrated scented extract has a scent substantially similar to the scent of the picked flowers, flowering tops and/or leaves.

12. Extract prepared according to any of the above claims.

13. Use of an extract according to claim 12 to prepare a perfume, as a perfumed dilution alcohol, a perfumery ingredient, a food flavouring or in the composition of a cosmetic product.
